# EUROPEAN PATENT APPLICATION

(11) **EP 1 830 315 A1**
(43) Date of publication of application: **05.09.2007**
(21) Application number: 07103325.2
(22) Date of filing: 01.03.2007
(51) Int. Cl.: G06Q 10/00

(54) **Electronic control and communication system for monitoring the state of products**

(30) Priority: 02.03.2006 IT MI20060378
(71) Applicant: Wireless Solutions S.R.L., 20121 Milano (IT)
(72) Inventor: Bruno, Francesco, 20146 Milan (IT); Amodio, Enrico, 22100 Como (IT)
(74) Representative: Coppo, Alessandro

(57) **Abstract**

Electronic control and communication system of the state of products comprising a microcontroller (2), a passive transponder (3), a power supply device (4) and a series of sensors (5); said microcontroller is capable of reading the data from the sensors and memorizing them in the transponder in the form of information relating to the state of products so that it can be read from the outside of the product.

## Description

The present invention relates to a control and communication system of the state and/or integrity of products and critical devices for safety, confidentiality of private information, or for the prevention of fraud. Said control must be exerted for products in the production phase, in distribution, for individual packaging or for pallets or containers in the distribution phase. For critical safety devices, the control is effected starting from their installation in the equipment for which they are destined.

The communication of the state of products in logistic lines, or devices connected to data communication networks such as Point of sale terminals, etc. allows local and/or central operators to be opportunely informed of critical states that have arisen, to be able to take corrective actions in good time and identify those responsible.

For the purposes of the present invention, the term products refers to finished products for users, components for industry, for the maintenance of equipment, protected by packagings in any metallic or non-metallic, paper, plastic material and arranged in pallets and containers for transportation along logistic lines.

For the purposes of the present invention critical safety devices can also be classified as products, such as for example, devices whose opening is only allowed by authorized persons for reasons of safety, privacy, protection from fraud, such as for example: safety devices installed on machinery or plants in general; on vehicles, parked in parking areas/warehouses, to be protected from break-ins and removal of accessories; on data processing terminals connected to banking networks for Point of sale payments, bancomats, or protected data communication networks, etc.

Safety devices are already known. For example portable safe-deposit boxes, such as those for example available in hotel rooms, having a lock which can be opened by inserting a pass or magnetic card in a specific seat, for example the same that is used for opening the room lock. To obtain the opening of the safe, it is therefore necessary to use a magnetic card which, in places in which atmospheric agents can be harmful for the card itself, such as beaches, for example, could be irremediably damaged and/or lost.

Portable safes are also known, having closures which can be activated by a digitable code by means of a keypad situated on the opening door of the safe itself. This type of safe requires the memorization of a code which the user could also forget with the consequence of not being able to open the safe-deposit box.

The Applicant has faced the problem of monitoring and controlling in general the state of products and verifying any possible alterations or break-ins.

The Applicant has produced an electronic control system of the state of products equipped with an electronic control device comprising a transponder (RFID), and a microcontroller in which information relating to the product and its state can be memorized, read and subsequently inserted.

This information can relate to anomalies, for example packagings which have been broken into, or with anomalies of state, missing packages, in order to opportunely identify those responsible, to allow the necessary corrective actions to be activated in good time on a local and central scale, for limiting the damage suffered.

Furthermore, the information can relate to the positioning of the products in the production and distribution lines with a cost/benefit ratio and reliability- timeliness which are such as to allow them to be used in mass.

This information can relate to the control of the state of integrity of critical safety devices: these are devices, installed on equipment, for example terminals for Point of sale data communication networks, bancomats, etc..., which are critical for safety and privacy and which are equipped with an electronic circuit with a microcontroller, battery, RFID transponder.

Further examples of products are:
- vehicles or machines to be protected from the robbery of components or accessories,
- means or packagings to be protected from impact or movements, accelerations during transportation (fragile goods),
- boxes containing confidential documents, or objects, to be protected from non-authorized access.

An aspect of the present invention relates to an electronic control system of the state of products characterized in that it comprises a microcontroller, a transponder, a power supply device and a series of sensors, said microcontroller being capable of reading the data from the sensors and memorizing them in the transponder in the form of information relating to the state of products so that it can be read from the outside of the product.

The characteristics and advantages of the system according to the present invention will appear more evident from the following illustrative and non-limiting description of an embodiment with reference to the enclosed figures in which:

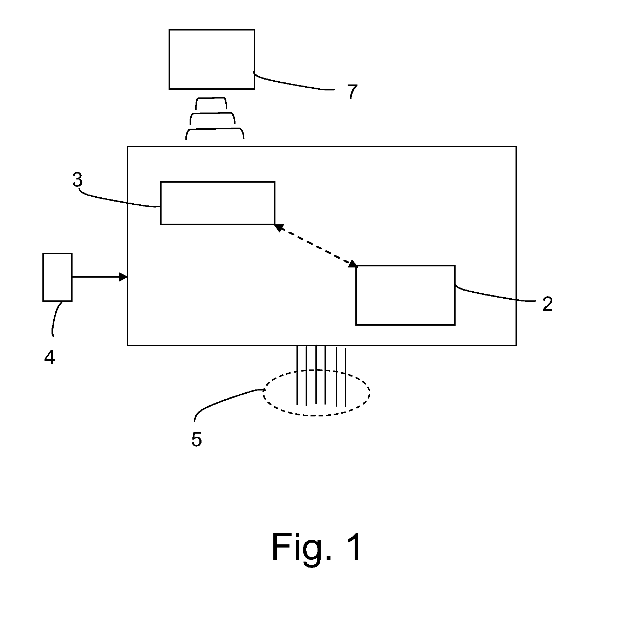

- figure 1 schematically represents the electronic system according to the present invention.

With reference to the above figure, the electronic system according to the present invention comprises a microcontroller 2, a transponder 3 (RFID), a power supply device 4 (for example which can be obtained from an external supply or battery) and a series of sensors 5.

Said sensors comprise a sensor suitable for detecting the opening or closing of the container, for example by means of an electric circuit which is electrically opened during the opening of the container and electrically closes with the closing of the container.

Other examples of sensors are a temperature sensor and a humidity sensor.

The system also comprises an external electronic monitoring circuit 7 which reads the information memorized on the transponder.

The system can also comprise an acoustic warning signal and additional sensors.

The circuit with the RFID transponder, with a microcontroller and relative aerial, is capable of detecting analogical signals deriving from the opening and closing detection circuit by means of conductor tracks which act as a switch. The microcontroller processes the opening or closing signals of the circuit of the tracks, and/or coming from the sensors, and transmits the updating data on the state of the packaging to the RFID transponder, which registers them in the specific memory.

The microcontroller also manages a clock and is therefore capable of associating the events registered with the relative date of occurrence.

The microcontroller also registers authorized opening codes, inserted with specific keypads.

The hard or flexible label, which can also be adhesive, can be applied to a vast range of containers, packagings, blocking and/or sealing belts or straps such as:
- paper, cardboard, in rolls or punched for the packaging of boxes,
- boxes, containers, cases made of plastic material and/or wood,
- blocking belts of the packages, or boxes containing materials, boxes containing confidential or secret documents etc...
- metallic boxes and/or containers, containers, with suitable spacers to avoid screening of the RFID radio frequency device.

The control system according to the present invention allows reliable data relating to the state of the products monitored to be communicated in real time to a local data processing system or, for example, via internet, to a central system, for example ERP.

For this purpose, the communication system is based on the registration at the moment of the loading of pallets, packagings, containers of the respective contents of original packages, by means of RFID palm-top readers, on equipped lines or platforms situated on movement means, control points, etc. capable of transmitting via WIFI, Blue-Tooth, etc. to local concentrators which can be connected via internet to portals for tracing the state and identifying the goods.

Analogously, at the moment of unloading, the data are verified relating to the state of the products with respect to the original shipping state.

In the case of data communication networks, for example Points of sale, Bancomats, the signaling can be sent directly onto the network itself to a central control and read locally by the transponder with palm-top readers, for example.

## Claims

1. An electronic control and communication system of the state of products **characterized in that** it comprises a microcontroller (2), a passive transponder (3), a power supply device (4) and a series of sensors (5); said microcontroller being capable of reading the data from the sensors and memorizing them in the transponder in the form of information relating to the state of products so that it can be read from the outside of the product.

2. The electronic system according to claim 1, wherein said sensors comprise a sensor suitable for detecting the opening or closing of the container, for example by means of an electric circuit which is electrically opened during the opening of the container and electrically closed with the closing of the container.

3. The electronic system according to claim 1, wherein said sensors comprise a temperature sensor and a humidity sensor.

4. The electronic system according to claim 1, which also comprises an external electronic monitoring circuit (7) suitable for reading the information memorized on the transponder.

5. The electronic system according to claim 1, wherein the microcontroller manages a clock and is capable of associating the events registered with the relative date of occurrence.

6. The electronic system according to claim 1, produced in the form of a hard or flexible label, which can also be adhesive and can be applied to containers, packagings, blocking and/or sealing belts or straps.

7. The electronic system according to claim 1, suitable for being used for detecting authorized opening codes.

8. The electronic system according to claim 1, suitable for being used along logistic lines of the state of containers and single packagings contained therein.
